# EUROPEAN PATENT SPECIFICATION

(11) **EP 1 705 039 B1**
(45) Date of publication and mention of the grant of the patent: **17.06.2009**
(21) Application number: 06075562.6
(22) Date of filing: 09.03.2006
(51) Int. Cl.: B60G 17/08

(54) **Control method for vehicle suspension system**
Verfahren zum Steuern eines Fahrzeugaufhängungssystems
Procédé de commande pour système de suspension de véhicule

(30) Priority: 22.03.2005 US 86109
(43) Date of publication of application: 27.09.2006
(73) Proprietor: Delphi Technologies, Inc., Troy, Michigan 48007 (US)
(72) Inventor: Barta, David J., Beavercreek , OH 45434 (US)
(74) Representative: Denton, Michael John

(56) References cited:
- US-A1- 2004 254 701
- US-B1- 6 247 685

## Description

### TECHNICAL FIELD

The present invention relates generally to vehicle dampers, and more particularly to a method for controlling a controllable suspension damper for a vehicle wheel and to a method for differentiating between a wheel event and a body event.

### BACKGROUND OF THE INVENTION

Known controllable suspension dampers for a vehicle wheel include magnetorheological suspension dampers and hydraulic-valve suspension dampers. A known method for controlling a magnetorheological (MR) suspension damper for a vehicle wheel includes obtaining the vertical velocity of the vehicle wheel. The vertical velocity of the vehicle wheel is the velocity of the vehicle wheel in a direction substantially perpendicular to the road surface. The known method uses a band-pass filter designed to favor passing vertical velocity signals having a frequency band (typically 10 to 20 Hertz) within the wheel event range (typically 10 Hertz or greater). An example of a wheel event is a wheel hop occurring when a wheel passes in and out of a disturbance in the road. A wheel event is different from a body event which produces a vertical velocity signal typically in the range of 1 to 3 Hertz. An example of a body event is a when the body of the vehicle moves (pitches, heaves, and then pitches again) after it goes up and over a dip in the road. The magnitude of the band-passed filtered signal remains fairly constant over the wheel event frequencies, but the phase of the filtered signal does not. The filtered signal is used in a calibratable look-up table, based on a predetermined wheel control curve, to obtain the MR damper control current, which is always applied to the MR suspension damper.

What is needed is an improved method for controlling a controllable suspension damper for a vehicle wheel event and an improved method for differentiating between a wheel event and a body event.

US-B1-6 247 685 discloses a method in accordance with the preamble of claims 1, 7, and 20.

### SUMMARY OF THE INVENTION

A first method of the invention is for differentiating between a wheel event and a body event in a control algorithm for a controllable suspension damper for a vehicle wheel. The first method includes steps a) through d). Step a) includes obtaining an input signal corresponding to the vertical velocity of the vehicle wheel. Step b) includes filtering the input signal with a filter to obtain an output signal. Step c) includes determining the frequency of the input signal using the input and output signals. Step d) includes distinguishing between a wheel event and a body event using the determined frequency.

A second method of the invention is for controlling a controllable suspension damper for a vehicle wheel. The second method includes steps a) through e). Step a) includes obtaining an input signal corresponding to the vertical velocity of the vehicle wheel. Step b) includes filtering the input signal with a filter to obtain an output signal. Step c) includes determining the frequency of the input signal using the input and output signals. Step d) includes applying a vehicle-wheel-event control signal to the controllable suspension damper for at least some determined frequencies greater than a predetermined low value. Step e) includes applying no vehicle-wheel-event control signal to the controllable suspension damper if the determined frequency is below the predetermined low value, wherein the predetermined low value differentiates between a vehicle wheel event and a vehicle body event.

A third method of the invention is for controlling a magnetorheological suspension damper for a vehicle wheel. The third method includes steps a) through e). Step a) includes obtaining an input signal corresponding to the vertical velocity of the vehicle wheel. Step b) includes filtering the input signal with a lead-lag filter to obtain an output signal. Step c) includes determining the frequency of the input signal using the magnitudes of the input and output signals. Step d) includes applying a vehicle-wheel-event control signal to the magnetorheological suspension damper for at least some determined frequencies greater than a predetermined low value. Step e) includes applying no vehicle-wheel-event control signal to the magnetorheological suspension damper if the determined frequency is below the predetermined low value, wherein the predetermined low value differentiates between a vehicle wheel event and a vehicle body event.

Several benefits and advantages are derived from one or more of the methods of the invention. In one example, applying no vehicle-wheel-event control signal to the controllable damper if the determined frequency is below a predetermined low value (such value differentiating between a vehicle wheel event and a vehicle body event) provides a more consistent ride than using the control method of the prior art. In the same or a different example, using a lead-lag filter gives a more consistent phase response over wheel event frequencies providing a more consistent ride than using the band-pass filter of the prior art.

### BRIEF DESCRIPTION OF THE DRAWINGS

Figure 1 is a schematic block diagram of an example of a control method of the invention; and
Figure 2 is a schematic block diagram of an example of the logic of a wheel-event differentiating method used in the control method of Figure 1.

### DESCRIPTION OF THE PREFERRED EMBODIMENT

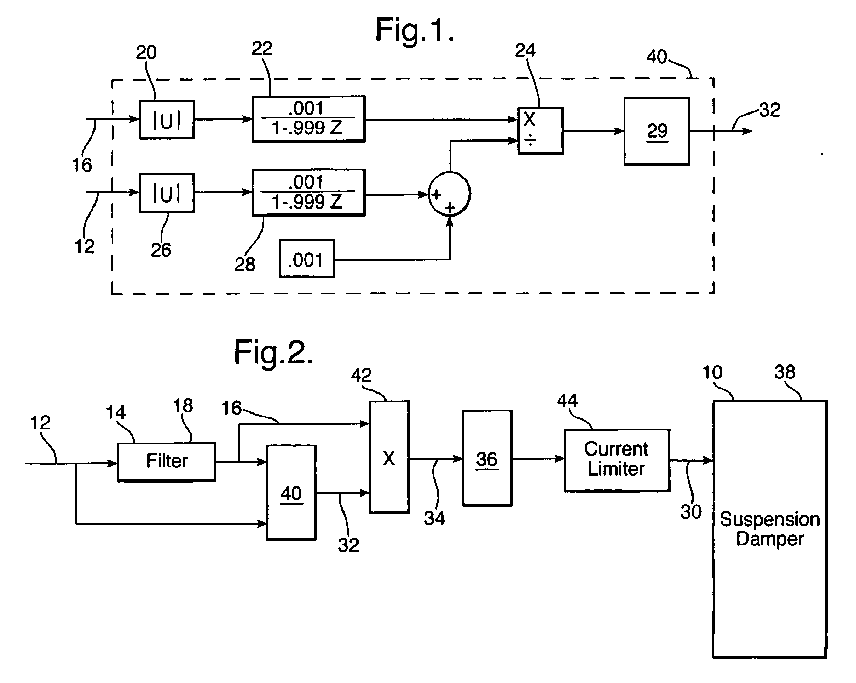

Referring now to Figures 1 and 2 of the drawings, a first method of the invention is for differentiating between a wheel event and a body event in a control algorithm for a controllable suspension damper 10 for a vehicle wheel. The first method includes steps a) through d). Step a) includes obtaining an input signal 12 corresponding to the vertical velocity of the vehicle wheel. The vertical velocity of a vehicle wheel is the velocity of the vehicle wheel in a direction substantially perpendicular to the road surface. Step b) includes filtering the input signal 12 with a filter 14 to obtain an output signal 16. Step c) includes determining the frequency of the input signal 12 using the input and output signals 12 and 16. Step d) includes distinguishing between a wheel event and a body event using the determined frequency.

In one construction, the filter 14 is a lead-lag filter 18. In one variation, step c) includes determining the ratio of the magnitude of the output signal 16 to the magnitude of the input signal 12. In one modification, step c) includes using a predetermined (calibratable) look-up table of determined frequencies versus ratios for the filter 14 (such as a lead-lag filter 18). In another construction, not shown, the filter is a band-pass filter, step c) includes determining the phase difference between the output and input signals, and step c) includes using a predetermined look-up table of determined frequencies versus phase differences for the band-pass filter. The use of other filter constructions is left to the artisan.

In one enablement of the first method, as shown in Figure 1, the output signal 16 from the lead-lag filter 18 enters block 20 where the absolute value of the amplitude is obtained and fed through a low-pass filter 22 (wherein z denotes the discrete transfer function form [z-transform]) to block 24. Input signal 12 enters block 26 where the absolute value of the amplitude is obtained and fed through a low pass filter 28 and summed with the number 0.001 (typical) before entering block 24. Block 24 calculates the amplitude ratio. It is noted that use of absolute values and low-pass filters provides averaging, and that the addition of the number 0.001 (typical) added in the denominator of the ratio insures no division-by-zero problems. The amplitude ratio is matched to a value of the known amplitude versus frequency characteristics of the lead-lag filter 18 to determine the frequency in block 29. Block 29 outputs a scale factor 32 (to be discussed in the second method of the invention). In one example, frequencies below a predetermined low value (e.g., 10 Hertz) defines a body event while frequencies above the predetermined low value defines a wheel event. Other enablements and examples (including other predetermined low values used to distinguish between wheel and body events) are left to the artisan.

A second method of the invention is for controlling a controllable suspension damper 10 for a vehicle wheel. The second method includes steps a) through e). Step a) includes obtaining an input signal 12 corresponding to the vertical velocity of the vehicle wheel. Step b) includes filtering the input signal 12 with a filter 14 to obtain an output signal 16. Step c) includes determining the frequency of the input signal 12 using the input and output signals 12 and 16. Step d) includes applying a vehicle-wheel-event control signal 30 to the controllable suspension damper 10 for at least some determined frequencies greater than a predetermined low value. Step e) includes applying no vehicle-wheel-event control signal to the controllable suspension damper 10 if the determined frequency is below the predetermined low value, wherein the predetermined low value differentiates between a vehicle wheel event and a vehicle body event. It is noted that applying no vehicle-wheel-event control signal is the same as applying a zero vehicle-wheel-event control signal.

In one example of the second method, the predetermined low value corresponds to a predetermined lowest wheel event frequency. In one variation, step d) applies a vehicle-wheel-event control signal 30 to the controllable suspension damper 10 for a range of determined frequencies between the predetermined low value and a predetermined high value, and step e) applies no vehicle-wheel-event control signal to the controllable suspension damper 10 if the determined frequency is above the predetermined high value. In one modification, the predetermined high value corresponds to a predetermined highest wheel event frequency. In one variation, the predetermined low value is 10 Hertz and the predetermined high value is 20 Hertz.

In one application of the second method, step d) includes multiplying the output signal 16 by a scale factor 32 to obtain a scaled output signal 34. In one variation, the scale factor 32 is unity. In a different variation, the scale factor 32 depends on the determined frequency to compensate for frequency-dependent gain changes of the filter 14.

In one implementation of the second method, the vehicle-wheel-event control signal 30 is determined from the scaled output signal 34 and a predetermined wheel control curve (shown as block 36).

In one employment of the second method, the vehicle-wheel-event control signal 30 is an electric current. In one variation, the controllable suspension damper 10 is a magnetorheological damper 38. In a different variation, the controllable suspension damper is a hydraulic-valve suspension damper. Other variations and employments are left to the artisan. In one construction, the filter 14 is a lead-lag filter 18. Other types of filters are left to those skilled in the art.

In one illustration of the second method, the predetermined lowest wheel event frequency corresponds to the natural frequency of the suspension spring (not shown), the controllable suspension damper 10, and the mass of the vehicle wheel (which includes the tire).

In one enablement of the second method, as shown in Figure 2, the input signal 12 branches, with one branch passing through the filter 14 to yield the output signal 16 and the other branch entering block 40. One branch of the output signal 16 enters block 40. Block 40 is shown in greater detail in Figure 1. The output of block 40 is the scale factor 32. Block 40 determines the frequency of the input signal 12 from the input and output signals 12 and 16. If the determined frequency indicates a wheel event to be controlled (e.g., a determined frequency between 10 and 20 Hertz), block 40 outputs the scale factor 32 as previously described. If the determined frequency indicates a body event (e.g., below 10 Hz) or a wheel event not to be controlled (e.g., above 20 Hz), block 40 outputs a zero scale factor. Returning to Figure 2, block 42 multiplies the output signal 16 by the scale factor 32. The scaled output signal 34 enters block 36 to apply a predetermined wheel control curve to output a current which enters current limiter 44 to become the vehicle-wheel-event control signal 30 to the magnetorheological damper 38. Other enablements are left to the artisan.

A third method of the invention is for controlling a magnetorheological suspension damper 38 for a vehicle wheel. The third method includes steps a) through f). Step a) includes obtaining an input signal 12 corresponding to the vertical velocity of the vehicle wheel. Step b) includes filtering the input signal 12 with a lead-lag filter 18 to obtain an output signal 16. Step c) includes determining the frequency of the input signal 12 using the magnitudes of the input and output signals 12 and 16. Step d) includes applying a vehicle-wheel-event control signal 30 to the magnetorheological suspension damper 38 for at least some determined frequencies greater than a predetermined low value. Step e) includes applying no vehicle-wheel-event control signal to the magnetorheological suspension damper 38 if the determined frequency is below the predetermined low value, wherein the predetermined low value differentiates between a vehicle wheel event and a vehicle body event.

Several benefits and advantages are derived from one or more of the methods of the invention. In one example, applying no vehicle-wheel-event control signal to the controllable damper if the determined frequency is below a predetermined low value (such value differentiating between a vehicle wheel event and a vehicle body event) provides a more consistent ride than using the control method of the prior art. In the same or a different example, using a lead-lag filter gives a more consistent phase response over wheel event frequencies providing a more consistent ride than using the band-pass filter of the prior art.

## Claims

1. A method for differentiating between a wheel event and a body event in a control algorithm for a controllable suspension damper for a vehicle wheel comprising the steps of:
a) obtaining an input signal corresponding to the vertical velocity of the vehicle wheel;
b) filtering the input signal with a filter to obtain an output signal; **caracterised by**
c) determining the frequency of the input signal using the input and output signals; and
d) distinguishing between a wheel event and a body event using the determined frequency.

2. The method of claim 1, wherein the filter is a lead-lag filter.

3. The method of claim 2, wherein step c) includes determining the ratio of the magnitude of the output signal to the magnitude of the input signal.

4. The method of claim 3, wherein step c) includes using a predetermined look-up table of determined frequencies versus ratios for the filter.

5. The method of claim 1, wherein step c) includes determining the ratio of the magnitude of the output signal to the magnitude of the input signal.

6. The method of claim 5, wherein step c) includes using a predetermined look-up table of determined frequencies versus ratios for the filter.

7. A method for controlling a controllable suspension damper for a vehicle wheel comprising the steps of:
a) obtaining an input signal corresponding to the vertical velocity of the vehicle wheel;
b) filtering the input signal with a filter to obtain an output signal; **characterised by**
c) determining the frequency of the input signal using the input and output signals;
d) applying a vehicle-wheel-event control signal to the controllable suspension damper for at least some determined frequencies greater than a predetermined low value; and
e) applying no vehicle-wheel-event control signal to the controllable suspension damper if the determined frequency is below the predetermined low value, wherein the predetermined low value differentiates between a vehicle wheel event and a vehicle body event.

8. The method of claim 7, wherein the predetermined low value corresponds to a predetermined lowest wheel event frequency.

9. The method of claim 8, wherein step d) applies a vehicle-wheel-event control signal to the controllable suspension damper for a range of determined frequencies between the predetermined low value and a predetermined high value, and wherein step e) applies no vehicle-wheel-event control signal to the controllable suspension damper if the determined frequency is above the predetermined high value.

10. The method of claim 9, wherein the predetermined high value corresponds to a predetermined highest wheel event frequency.

11. The method of claim 10, wherein step d) includes multiplying the output signal by a scale factor to obtain a scaled output signal.

12. The method of claim 11, wherein the scale factor is unity.

13. The method of claim 11, wherein the scale factor depends on the determined frequency to compensate for frequency-dependent gain changes of the filter.

14. The method of claim 10, wherein the vehicle-wheel-event control signal is determined from the scaled output signal and a predetermined wheel control curve.

15. The method of claim 14, wherein the vehicle-wheel-event control signal is an electric current.

16. The method of claim 15, wherein the controllable suspension damper is a magnetorheological damper.

17. The method of claim 14, wherein the predetermined lowest wheel event frequency corresponds to the natural frequency of the suspension spring, the controllable suspension damper, and the mass of the vehicle wheel.

18. The method of claim 17, wherein the predetermined low value is 10 Hertz and the predetermined high value is 20 Hertz.

19. The method of claim 14, wherein the filter is a lead-lag filter.

20. A method for controlling a magnetorheological suspension damper for a vehicle wheel comprising the steps of:
a) obtaining an input signal corresponding to the vertical velocity of the vehicle wheel;
b) filtering the input signal with a lead-lag filter to obtain an output signal; **characterised by**
c) determining the frequency of the input signal using the magnitude of the input and output signals;
d) applying a vehicle-wheel-event control signal to the magnetorheological suspension damper for at least some determined frequencies greater than a predetermined low value; and
e) applying no vehicle-wheel-event control signal to the magnetorheological suspension damper if the determined frequency is below the predetermined low value, wherein the predetermined low value differentiates between a vehicle wheel event and a vehicle body event.

## Patentansprüche

1. Verfahren zum Unterscheiden zwischen einem Rad-Ereignis und einem Karosserie-Ereignis in einem Steueralgorithmus für einen steuerbaren Aufhängungsdämpfer für ein Fahrzeugrad, das die Schritte aufweist:
a) Erlangen eines Eingangssignals, das der vertikalen Geschwindigkeit des Fahrzeugrades entspricht;
b) Filtern des Eingangssignals mit einem Filter, um ein Ausgangssignal zu erlangen; **gekennzeichnet durch**
c) Bestimmen der Frequenz des Eingangssignals unter Verwendung der Eingangs- und Ausgangssignale; und
d) Unterscheiden zwischen einem Rad-Ereignis und einem Karosserie-Ereignis unter Verwendung der bestimmten Frequenz.

2. Verfahren gemäß Anspruch 1, wobei der Filter ein Lead-Lag-Filter ist.

3. Verfahren gemäß Anspruch 2, wobei Schritt c) ein Bestimmen des Verhältnisses der Größe des Ausgangssignals zu der Größe des Eingangssignals umfasst.

4. Verfahren gemäß Anspruch 3, wobei Schritt c) ein Verwenden einer vorgegebenen Verweistabelle von bestimmten Frequenzen zu Verhältnissen für den Filter umfasst.

5. Verfahren gemäß Anspruch 1, wobei Schritt c) ein Bestimmen des Verhältnisses der Größe des Ausgangssignals zu der Größe des Eingangssignals umfasst.

6. Verfahren gemäß Anspruch 5, wobei Schritt c) ein Verwenden einer vorgegebenen Verweistabelle von bestimmten Frequenzen zu Verhältnissen für den Filter umfasst.

7. Verfahren zum Steuern eines steuerbaren Aufhängungsdämpfers für ein Fahrzeugrad, das die Schritte aufweist:
a) Erlangen eines Eingangssignals, das der vertikalen Geschwindigkeit des Fahrzeugrades entspricht;
b) Filtern des Eingangssignals mit einem Filter, um ein Ausgangssignal zu erlangen; **gekennzeichnet durch**
c) Bestimmen der Frequenz des Eingangssignals unter Verwendung der Eingangs- und Ausgangssignale;
d) Anwenden eines Fahrzeugrad-Ereignis-Steuersignals auf den steuerbaren Aufhängungsdämpfer für zumindest einige bestimmte Frequenzen größer als ein vorgegebener niedriger Wert; und
e) kein Anwenden eines Fahrzeugrad-Ereignis-Steuersignals auf den steuerbaren Aufhängungsdämpfer, wenn die bestimmte Frequenz unter dem vorgegebenen niedrigen Wert liegt, wobei der vorgegebene niedrige Wert zwischen einem Fahrzeugrad-Ereignis und einem Fahrzeugkarosserie-Ereignis unterscheidet.

8. Verfahren gemäß Anspruch 7, wobei der vorgegebene niedrige Wert einer vorgegebenen niedrigsten Rad-Ereignis-Frequenz entspricht.

9. Verfahren gemäß Anspruch 8, wobei Schritt d) ein Fahrzeugrad-Ereignis-Steuersignal auf den steuerbaren Aufhängungsdämpfer für einen Bereich von bestimmten Frequenzen zwischen dem vorgegebenen niedrigen Wert und einem vorgegebenen hohen Wert anwendet, und wobei Schritt e) kein Fahrzeugrad-Ereignis-Steuersignal auf den steuerbaren Aufhängungsdämpfer anwendet, wenn die bestimmte Frequenz über dem vorgegebenen hohen Wert ist.

10. Verfahren gemäß Anspruch 9, wobei der vorgegebene hohe Wert einer vorgegebenen höchsten Rad-Ereignis-Frequenz entspricht.

11. Verfahren gemäß Anspruch 10, wobei Schritt d) ein Multiplizieren des Ausgangssignals mit einem Skalierungsfaktor umfasst, um ein skaliertes Ausgangssignal zu erlangen.

12. Verfahren gemäß Anspruch 11, wobei der Skalierungsfaktor Eins ist.

13. Verfahren gemäß Anspruch 11, wobei der Skalierungsfaktor von der bestimmten Frequenz abhängt, um Frequenz-abhängige Verstärkungsänderungen des Filters zu kompensieren.

14. Verfahren gemäß Anspruch 10, wobei das Fahrzeugrad-Ereignis-Steuersignal aus dem skalierten Ausgangssignal und einer vorgegebenen Radsteuerkurve bestimmt wird.

15. Verfahren gemäß Anspruch 14, wobei das Fahrzeugrad-Ereignis-Steuersignal ein elektrischer Strom ist.

16. Verfahren gemäß Anspruch 15, wobei der steuerbare Aufhängungsdämpfer ein magnetorheologischer Dämpfer ist.

17. Verfahren gemäß Anspruch 14, wobei die vorgegebene niedrigste Rad-Ereignis-Frequenz der natürlichen Frequenz der Aufhängungsfeder, des steuerbaren Aufhängungsdämpfers und der Masse des Fahrzeugrades entspricht.

18. Verfahren gemäß Anspruch 17, wobei der vorgegebene niedrige Wert 10 Hertz und der vorgegebene hohe Wert 20 Hertz ist.

19. Verfahren gemäß Anspruch 14, wobei der Filter ein Lead-Lag-Filter ist.

20. Verfahren zum Steuern eines magnetorheologischen Aufhängungsdämpfers für ein Fahrzeugrad, das die Schritte aufweist:
a) Erlangen eines Eingangssignals, das der vertikalen Geschwindigkeit des Fahrzeugrades entspricht;
b) Filtern des Eingangssignals mit einem Lead-Lag-Filter, um ein Ausgangssignal zu erlangen; **gekennzeichnet durch**
c) Bestimmen der Frequenz des Eingangssignals unter Verwendung der Größen der Eingangs- und Ausgangssignale;
d) Anwenden eines Fahrzeugrad-Ereignis-Steuersignals auf den magnetorheologischen Aufhängungsdämpfer für zumindest einige bestimmte Frequenzen größer als ein vorgegebener niedriger Wert; und
e) kein Anwenden eines Fahrzeugrad-Ereignis-Steuersignals auf den magnetorheologischen Aufhängungsdämpfer, wenn die bestimmte Frequenz unter dem vorgegebenen niedrigen Wert liegt, wobei der vorgegebene niedrige Wert zwischen einem Fahrzeugrad-Ereignis und einem Fahrzeugkarosserie-Ereignis unterscheidet.

## Revendications

1. Procédé pour différencier entre un événement concernant une roue et un événement concernant un corps dans un algorithme de commande destiné à un amortisseur de suspension susceptible d'être commandé et destiné à une roue de véhicule, comprenant les étapes consistant à :
a) obtenir un signal d'entrée correspondant à la vitesse verticale de la roue du véhicule ;
b) filtrer le signal d'entrée avec un filtre pour obtenir un signal de sortie ;
**caractérisé par** les étapes consistant à
c) déterminer la fréquence du signal d'entrée en utilisant le signal d'entrée et le signal de sortie ; et
d) distinguer entre un événement concernant la roue et un événement concernant le corps en utilisant la fréquence déterminée.

2. Procédé selon la revendication 1, dans lequel le filtre est un filtre "lead-lag".

3. Procédé selon la revendication 2, dans lequel l'étape c) inclut de déterminer le rapport de l'amplitude du signal de sortie sur l'amplitude du signal d'entrée.

4. Procédé selon la revendication 3, dans lequel l'étape c) inclut d'utiliser une table de lecture prédéterminée de fréquences déterminées en fonction de rapports pour le filtre.

5. Procédé selon la revendication 1, dans lequel l'étape c) inclut de déterminer le rapport de l'amplitude du signal de sortie sur l'amplitude du signal d'entrée.

6. Procédé selon la revendication 5, dans lequel l'étape c) inclut d'utiliser une table de lecture prédéterminée de fréquences déterminées en fonction de rapports pour le filtre.

7. Procédé pour commander un amortisseur de suspension susceptible d'être commandé pour une roue de véhicule, comprenant les étapes consistant à :
a) obtenir un signal d'entrée correspondant à la vitesse verticale de la roue du véhicule ;
b) filtrer le signal d'entrée avec un filtre pour obtenir un signal de sortie ;
**caractérisé par** les étapes consistant à :
c) déterminer la fréquence du signal d'entrée en utilisant le signal d'entrée et le signal de sortie ;
d) appliquer un signal de commande d'événement véhicule/roue à l'amortisseur de suspension susceptible d'être commandé pour au moins certaine fréquence déterminée supérieure à une valeur basse prédéterminée ; et
e) n'appliquer aucun signal de commandes d'événement véhicule/roue à l'amortisseur de suspension susceptible d'être commandé si la fréquence déterminée est au-dessous de la valeur basse prédéterminée, dans lequel la valeur basse prédéterminée effectue une différenciation entre un événement concernant la roue et un événement concernant le corps du véhicule.

8. Procédé selon la revendication 7, dans lequel la valeur basse prédéterminée correspond à une fréquence la plus basse prédéterminée pour un événement concernant la roue.

9. Procédé selon la revendication 8, dans lequel l'étape d) applique un signal de commande d'événement véhicule/roue à l'amortisseur de suspension susceptible d'être commandé sur une plage de fréquence déterminée entre la valeur basse prédéterminée et une valeur haute prédéterminée, et dans lequel l'étape e) n'applique aucun signal de commande d'événement véhicule/roue à l'amortisseur de suspension susceptible d'être commandé si la fréquence déterminée est au-dessus de la valeur haute prédéterminée.

10. Procédé selon la revendication 9, dans lequel la valeur haute prédéterminée correspond à une fréquence la plus haute prédéterminée pour un événement concernant la roue.

11. Procédé selon la revendication 10, dans lequel l'étape d) inclut de multiplier le signal de sortie par un facteur d'échelle pour obtenir un signal de sortie mis à l'échelle.

12. Procédé selon la revendication 11, dans lequel le facteur d'échelle est égal à l'unité.

13. Procédé selon la revendication 11, dans lequel le facteur d'échelle dépend de la fréquence déterminée pour compenser les changements de gain du filtre qui dépendent de la fréquence.

14. Procédé selon la revendication 10, dans lequel le signal de commande d'événement véhicule/roue est déterminé à partir du signal de sortie mis à l'échelle et d'une courbe de commande de roue prédéterminée.

15. Procédé selon la revendication 14, dans lequel le signal de commande d'événement véhicule/roue est un courant électrique.

16. Procédé selon la revendication 15, dans lequel l'amortisseur de suspension susceptible d'être commandé est un amortisseur magnétorhéologique.

17. Procédé selon la revendication 14, dans lequel la fréquence la plus basse prédéterminée pour un événement concernant la roue correspond à la fréquence naturelle du ressort de suspension, de l'amortisseur de suspension susceptible d'être commandé, et de la masse de la roue du véhicule.

18. Procédé selon la revendication 17, dans lequel la valeur basse prédéterminée est 10 Hz et la valeur haute prédéterminée est 20 Hz.

19. Procédé selon la revendication 14, dans lequel le filtre est un filtre "lead-lag".

20. Procédé pour commander un amortisseur de suspension magnétorhéologique pour une roue d'un véhicule, comprenant les étapes consistant à :
a) obtenir un signal d'entrée correspondant à la vitesse verticale de la roue du véhicule ;
b) filtrer le signal d'entrée avec un filtre "lead-lag" pour obtenir un signal de sortie ;
**caractérisé par** les étapes consistant à :
c) déterminer la fréquence du signal d'entrée en utilisant les amplitudes du signal d'entrée et du signal de sortie ;
d) appliquer un signal de commande d'événement véhicule/roue à l'amortisseur de suspension magnétorhéologique pour au moins certaine fréquence déterminée supérieure à une valeur basse prédéterminée ; et
e) n'appliquer aucun signal de commande d'événement véhicule/roue à l'amortisseur de suspension magnétorhéologique si la fréquence déterminée est au-dessous de la valeur basse prédéterminée, et ladite valeur basse prédéterminée effectue une différenciation entre un événement concernant la roue et un événement concernant le corps du véhicule.
